# EUROPEAN PATENT APPLICATION

(11) **EP 4 579 198 A1**
(43) Date of publication of application: **02.07.2025**
(21) Application number: 24221428.6
(22) Date of filing: 19.12.2024
(51) Int. Cl.: G01F 15/00, F15D 1/02, G01F 15/18, G01F 1/66

(54) **FRONT-INSERT ASSEMBLY METHOD AND APPARATUS FOR FLOW CONDITIONER**

(30) Priority: 26.12.2023 US 202318396649
(71) Applicant: Honeywell International Inc., Charlotte, NC 28202 (US)
(72) Inventor: LIU, Rui, Charlotte, 28202 (US); PENG, Wen, Charlotte, 28202 (US); LUO, Dong, Charlotte, 28202 (US); YANG, Li, Charlotte, 28202 (US)
(74) Representative: Haseltine Lake Kempner LLP

(57) **Abstract**

A flow conditioner apparatus and a method of assembling the flow conditioner apparatus can include a flow conditioner configured for insertion with a process pipe with respect to an ultrasonic flow meter, wherein the flow conditioner is characterized by an outer diameter smaller than the inner diameter of the process pipe, and a front insert assembly comprising a flange, thread, or welding connection, wherein the front insert assembly is configured to securely fix the flow conditioner within the process pipe. The flow conditioner can be configured to provide a uniform and symmetrical flow profile within the process pipe. The flow conditioner can further include a construction suitable for limited installation space.

## Description

### TECHNICAL FIELD

Embodiments are generally related to flow meter and flow conditioners. Embodiments further relate to methods for assembling a flow meter with a flow conditioner. Embodiments further relate to techniques for installing flow conditioners in locations where space is restricted, and without the need for modifying existing pipe configurations in which the pipes are arranged.

### BACKGROUND

Ultrasonic Gas Flow Metering (UGFM) relates to the use of ultrasonic technology to measure the flow of gas in various industrial applications. Instead of relying on traditional mechanical components, UGFM utilizes ultrasonic sensors to accurately determine the velocity of the gas flow. This technology is known for its advantages, such as having no moving parts, requiring minimal maintenance, offering a wide measuring range for different flow rates, and providing high turn-down ratios in comparison to mechanical meters. UGFM is commonly employed in sectors such as oil and gas, chemical processing, and utilities for precise and efficient measurement of gas flow.

UGFM is expanding its applications downstream, leveraging its benefits of having no moving parts, minimal maintenance requirements, a broad measuring range for various flow rates, and a high turn-down ratio when compared to mechanical meters. Additionally, it offers lower pressure loss throughout the meter and seamless integration with future smart metering technologies for gas composition and diagnostics.

Despite these advantages, ultrasonic gas flow meters are more sensitive to flow turbulence than traditional mechanical meters. To address this sensitivity, a long upstream straight pipe is typically required to allow the flow to develop into a symmetrical profile, which is ideal for accurate ultrasonic flow measurement.

Current ultrasonic gas flow meters including flow conditioners are difficult to modify and update and install in confined spaces. The present inventors believer that a solution to this problem involves development a novel approach to the assembly of ultrasonic flow meters, particularly installation in confined spaces, which could result in a practical solution for replacing mechanical meters while maintaining the advantages of ultrasonic flow measurement.

### BRIEF SUMMARY

The following summary is provided to facilitate an understanding of some of the features of the disclosed embodiments and is not intended to be a full description. A full appreciation of the various aspects of the embodiments disclosed herein can be gained by taking the specification, claims, drawings, and abstract as a whole.

It is, therefore, one aspect of the embodiments to provide for an improved flow meter assembly.

It is another aspect of the embodiments to provide for a flow meter assembly that seamlessly integrates with a flow conditioner.

It is a further aspect of the embodiments to provide for an improved method of assembling a flow meter with a flow conditioner.

It is yet another aspect of the embodiments to provide for a flow conditioner front-insert assembly method for ultrasonic flow meters that can provide for a uniform and symmetrical flow profile while consuming limited installation space.

The aforementioned aspects and other objectives can now be achieved as described herein. In an embodiment, a flow conditioner apparatus, can include a flow conditioner configured for insertion with a process pipe with respect to an ultrasonic flow meter, wherein the flow conditioner is characterized by an outer diameter smaller than the inner diameter of the process pip, and a front insert assembly comprising a flange, thread, or welding connection, wherein the front insert assembly is configured to securely fix the flow conditioner within the process pipe.

In an embodiment, the flow conditioner can be configured to provide a uniform and symmetrical flow profile within the process pipe.

In an embodiment, flow conditioner can comprise a construction suitable for limited installation space.

In an embodiment, the front insert assembly can be integrally connected to the flow conditioner for efficient installation and assembly.

In an embodiment, the flange, thread, or welding connection of the front insert assembly can be adaptable to various process pipe configurations.

In an embodiment, the flow conditioner can comprise a series of flow-controlling elements to achieve the uniform and symmetrical flow profile.

In an embodiment, the flow-controlling elements can be strategically positioned and shaped to minimize turbulence and enhance the flow conditioning performance of the flow conditioner apparatus.

In an embodiment, flow conditioner apparatus, can include a flow conditioner configured for insertion with a process pipe, wherein the flow conditioner includes an outer diameter smaller than the inner diameter of the process pipe, and a front insert assembly that securely fixes the flow conditioner within the process pipe.

In an embodiment, the front insert assembly can comprise a connection mechanism for fixing the flow conditioner within the process pipe.

In an embodiment, the aforementioned connection mechanism can be one or more of, for example, a flange, a thread or a welding connection.

In an embodiment, a method of assembling a flow conditioner, can involve: positioning a flow conditioner inside a process pipe with respect to an ultrasonic flow meter, ensuring that the outer diameter of the flow conditioner is smaller than the inner diameter of the process pipe, selecting a front insert assembly with a flange, a thread, or a welding connection, and securing the flow conditioner within the process pipe using the front insert assembly,.

An embodiment of the method can further involve configuring the flow conditioner to provide a uniform and symmetrical flow profile within the process pipe.

An embodiment of the method may also involve constructing the flow conditioner with features suitable for limited installation space.

An embodiment of the method can further involve integrally connecting the front insert assembly to the flow conditioner for streamlined installation and assembly.

An embodiment of the method can further involve selecting the flange, the thread, or the welding connection for the front insert assembly that is adaptable to various process pipe configurations.

An embodiment of the method can also involve integrating a series of flow-controlling elements into the flow conditioner to achieve a uniform and symmetrical flow profile.

An embodiment of the method may also involve strategically positioning and shaping the flow-controlling elements within the flow conditioner to minimize turbulence and enhance flow conditioning performance.

### BRIEF DESCRIPTION OF THE DRAWINGS

The accompanying figures, in which like reference numerals refer to identical or functionally-similar elements throughout the separate views and which are incorporated in and form a part of the specification, further illustrate the present invention and, together with the detailed description of the invention, serve to explain the principles of the present invention.
FIG. 1A, FIG. 1B and FIG. 1C respectively illustrate side, sectional and perspective views of a flow meter assembly configured to handle mild flow disturbances, in accordance of an embodiment;
FIG. 2A, FIG. 2B and FIG. 2C respectively illustrate side, sectional and perspective views of a flow meter assembly configured to handle severe flow disturbances, in accordance of an embodiment;
FIG. 3A and FIG. 3B respectively illustrate sectional and perspective views of a flow meter body and front insert assembly engaged with a pipe and capable of handling mild flow disturbances, in accordance with an embodiment;
FIG. 4A and FIG 4B respectively illustrate sectional and perspective views of the flow meter body and front insert assembly engaged with a pipe and capable of handling severe flow disturbances, in accordance with an embodiment;
FIG. 5A, FIG. 5B, FIG. 5C and FIG. 5D respectively illustrate perspective, front, side sectional and back views of the flow meter assembly configured with a front insert flow conditioner assembly capable of handling mild flow disturbances, in accordance with an embodiment;
FIG. 6A, FIG. 6B, FIG. 6C and FIG. 6D respectively illustrate perspective, front, side sectional and back views of the flow meter assembly configured with a front insert flow conditioner assembly capable of handling severe flow disturbances, in accordance with an embodiment;
FIG. 7A, FIG. 7B and FIG. 7C respectively illustrate front, side sectional and back views of a flow conditioner assembly inserted into a pipe and capable of handling mild flow disturbances, in accordance with an embodiment;
FIG. 8 illustrates a side sectional view of a flow conditioner assembly inserted into a pipe and capable of handling severe flow disturbances, in accordance with an embodiment; and
FIG. 9 illustrates a flow chart of operations depicting operational steps of a method for assembling a flow conditioner, in accordance with an embodiment.

In the drawings described and illustrated herein, identical or similar parts and elements are generally indicated by identical reference numerals.

### DETAILED DESCRIPTION

The particular values and configurations discussed in these non-limiting examples can be varied and are cited merely to illustrate one or more embodiments and are not intended to limit the scope thereof.

Subject matter will now be described more fully hereinafter with reference to the accompanying drawings, which form a part hereof, and which show, by way of illustration, specific example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other issues, subject matter may be embodied as methods, devices, components, or systems. Accordingly, embodiments may, for example, take the form of hardware, software, firmware, or a combination thereof. The following detailed description is, therefore, not intended to be interpreted in a limiting sense.

Throughout the specification and claims, terms may have nuanced meanings suggested or implied in context beyond an explicitly stated meaning. Likewise, phrases such as "in one embodiment" or "in an example embodiment" and variations thereof as utilized herein may not necessarily refer to the same embodiment and the phrase "in another embodiment" or "in another example embodiment" and variations thereof as utilized herein may or may not necessarily refer to a different embodiment. It is intended, for example, that claimed subject matter include combinations of example embodiments in whole or in part.

In general, terminology may be understood, at least in part, from usage in context. For example, terms such as "and," "or," or "and/or" as used herein may include a variety of meanings that may depend, at least in part, upon the context in which such terms are used. Generally, "or" if used to associate a list, such as A, B, or C, is intended to mean A, B, and C, here used in the inclusive sense, as well as A, B, or C, here used in the exclusive sense. In addition, the term "one or more" as used herein, depending at least in part upon context, may be used to describe any feature, structure, or characteristic in a singular sense or may be used to describe combinations of features, structures, or characteristics in a plural sense. Similarly, terms such as "a," "an," or "the", again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

The embodiments relate to a method and system for assembling flow conditioners at the front end of a flow meter assembly and can be implemented through machining the meter with a flange and thread connection. This assembly approach is applicable in both gas and liquid pipelines, particularly before instruments or equipment that demand a consistent and symmetrical flow profile while occupying minimal installation space. The flow conditioner can employ this approach for insertion into a front pipe.

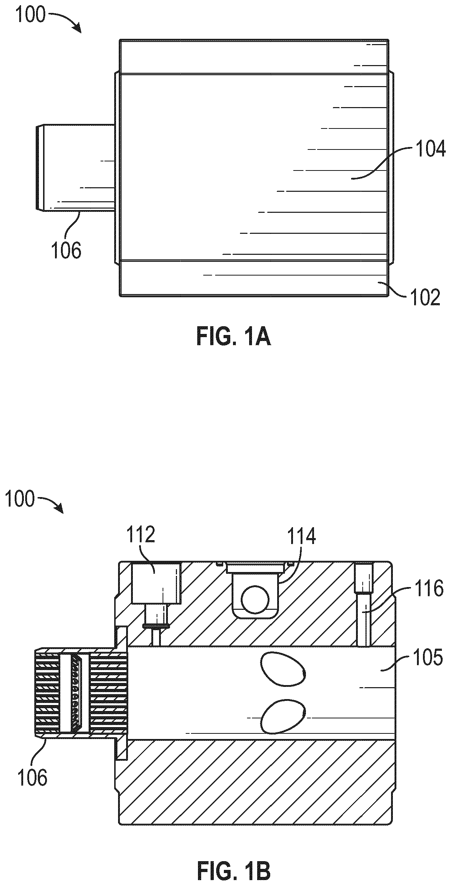

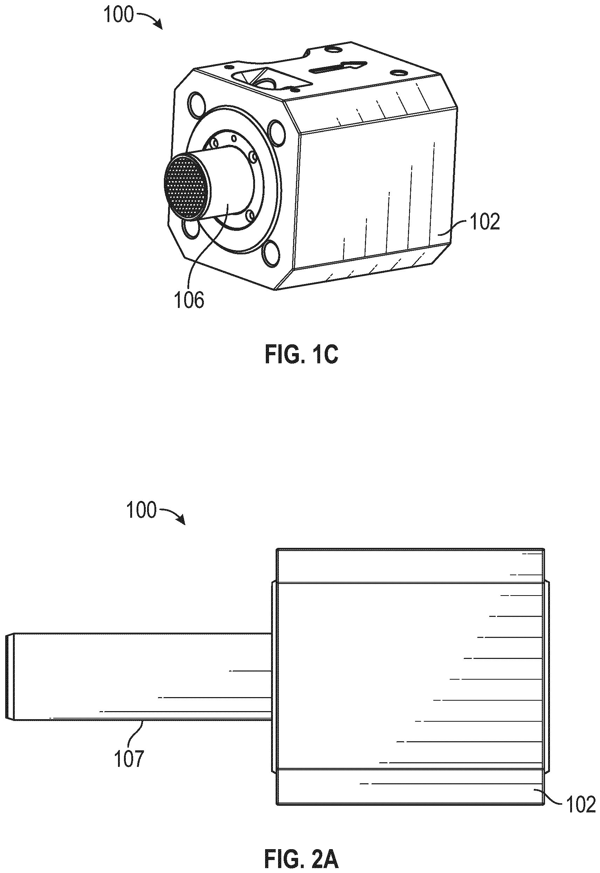

FIG. 1A, FIG. 1B and FIG. 1C respectively illustrate side, sectional and perspective views of a flow meter assembly 100 configured to handle mild flow disturbances, in accordance of an embodiment. The flow meter assembly includes a flow meter body 102 that includes a central section 104 that contains a flow tube 105 within the flow meter body 102. A flow conditioner 106 connects to the flow tube 105 and extends outward from the flow meter body 102. The flow meter assembly 100 shown in FIG. 1A, FIG. 1B and FIG. 1C can handle mild flow disturbances. Furthermore, the length or dimensions of the flow meter body 102 can be approximately 3 times that of the inner diameter of flow tube 105, and the length of the flow conditioner 106 can be approximately 1 times that of the inner diameter of the flow tube 105 (i.e., 1D versus 3D). The flow meter assembly 100 can include a pressure sensor 112, a connection for signal process unit 114, and a temperature sensor 116.

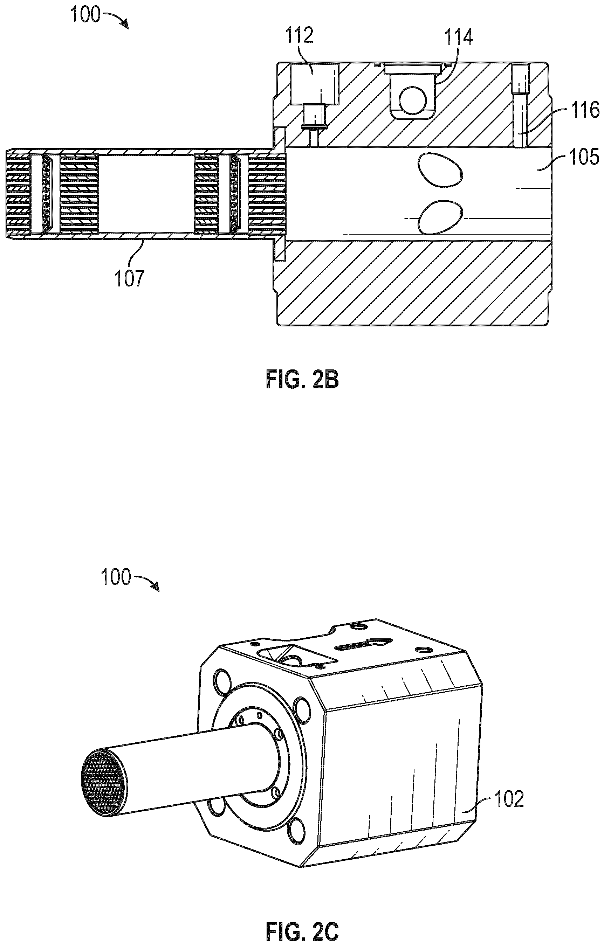

FIG. 2A, FIG. 2B and FIG. 2C respectively illustrate side, sectional and perspective views of a flow meter assembly configured to handle severe flow disturbances, in accordance of an embodiment. The flow meter assembly 100 shown in FIG. 2A, FIG. 2B and FIG. 2C includes the flow meter body 102 comprising the central section 104 containing flow tube 105 within the flow meter body 102. A flow conditioner 107 can connect to flow tube 105 and extends outward from the flow meter body 102. The flow meter assembly 100 shown in FIG. 2A, FIG. 2B and FIG. 2C can handle severe flow disturbances. Furthermore, the length or dimensions of the flow meter body 102 can be approximately 3 times that of the inner diameter of the flow tube 105, and the length of the flow conditioner 107 can be approximately 3 times that of the inner diameter of the flow tube 105 (i.e., 3D versus 3D). The flow meter assembly 100 can include a pressure sensor 112, a connection for the signal process unit 114, and a temperature sensor 116.

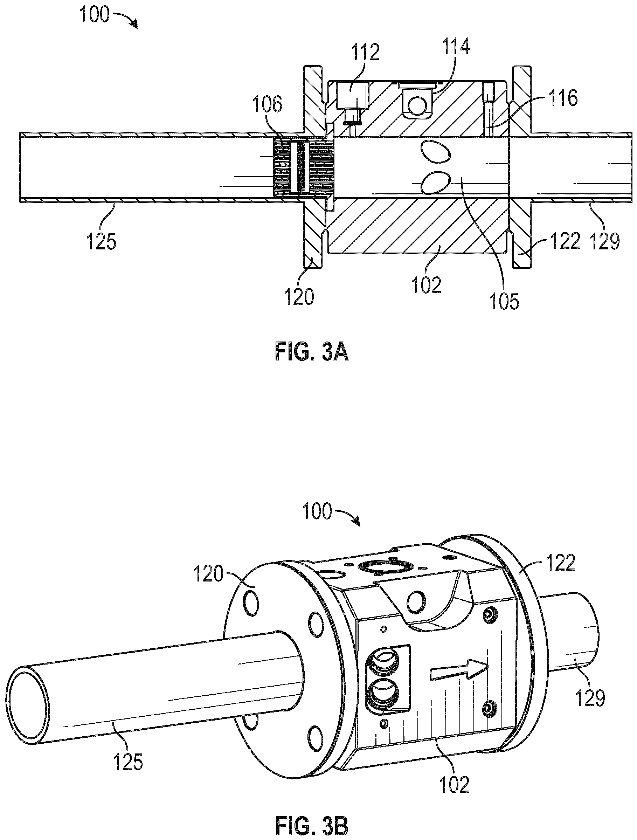

FIG. 3A and FIG. 3B respectively illustrate sectional and perspective views of a flow meter body 102 and front insert assembly 120 engaged with a front pipe 125 (e.g., a process pipe or flow pipe) and capable of handling mild flow disturbances, in accordance with an embodiment. The front pipe 125 can be surrounded by the front insert assembly 120 at the flow conditioner 106. That is, the front insert assembly 120 surrounds the pipe 125 and in turn the flow conditioner 106 which is inserted into the pipe 125. A rear insert assembly 122 can be located at the other side of the flow meter assembly 100 opposite the front insert assembly 120 and can surround a rear pipe 129 (e.g., a flow pipe or process pipe) at the rear of the flow meter assembly 100. The front insert assembly 120 may be a connection mechanism such as, for example, a flange, a thread, or a welding connection in different embodiments and can be configured to securely fix the flow conditioner 106 within the front pipe 125.

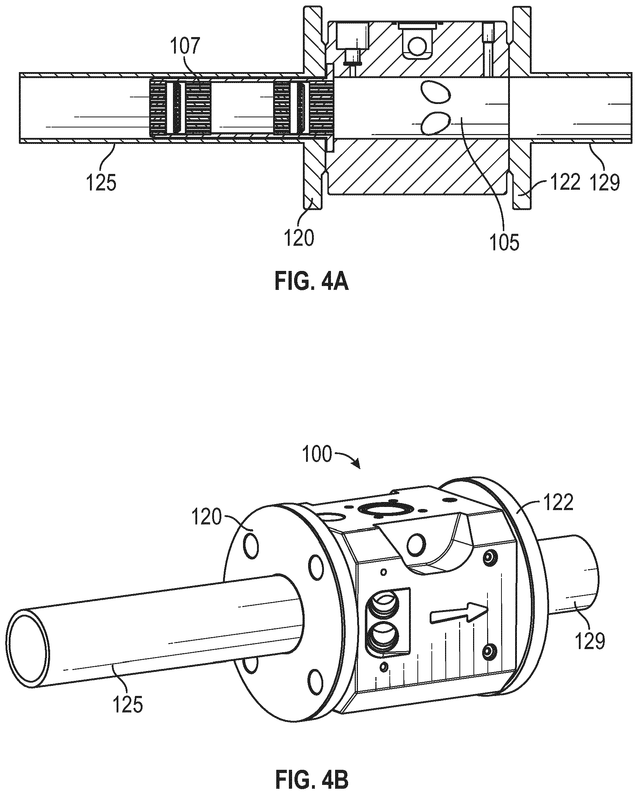

FIG. 4A and FIG 4B respectively illustrate sectional and perspective views of the flow meter body 102 and front insert assembly 120 engaged with the pipe 125 and capable of handling severe flow disturbances, in accordance with an embodiment. The configuration shown in FIG. 4A and FIG. 4B is similar to the arrangement shown in FIG. 3 and FIG. 3B, with the difference in the presence of the flow conditioner 107 shown in FIG. 4A and FIG. 4B. The flow conditioner 107 has a longer length than that of the flow conditioner 106, which facilitates handling of severe flow disturbances by the configuration shown in FIG. 4A and FIG. 4B. The front insert assembly 120 may be a flange, a thread, or a welding connection in different embodiments and can be configured to securely fix the flow conditioner 107 within the front pipe 125.

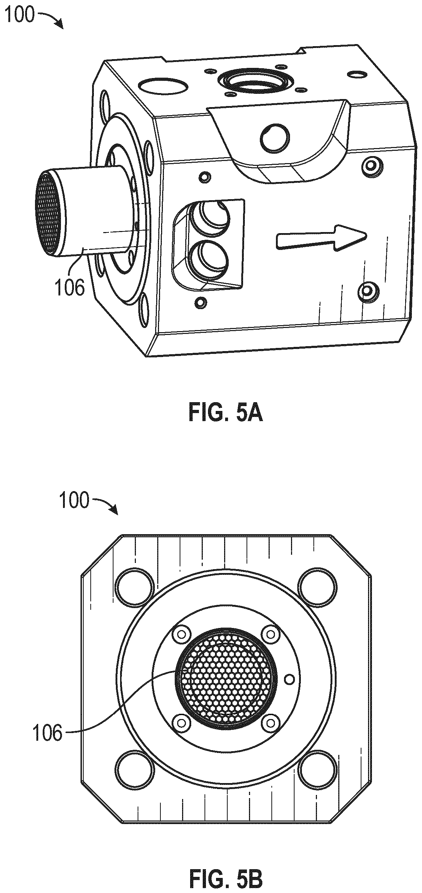

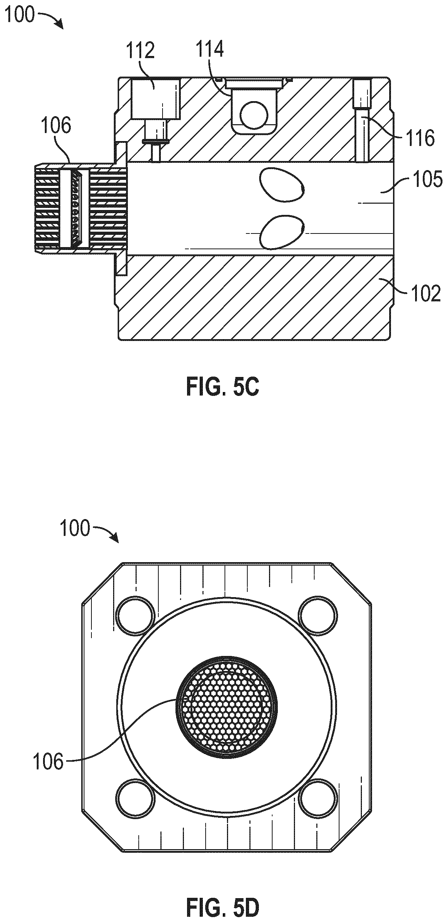

FIG. 5A, FIG. 5B, FIG. 5C and FIG. 5D respectively illustrate perspective, front, side sectional and back views of the flow meter assembly 100 configured with a front insert flow conditioner assembly capable of handling mild flow disturbances, in accordance with an embodiment. The flow conditioner 106 shown in FIG. 5A, FIG. 5B, FIG. 5C and FIG. 5D can be configured to be inserted inside a process pipe (not shown in these figures) with respect to the ultrasonic flow meter 116. The flow conditioner 106 can be characterized by an outer diameter smaller than the inner diameter of the process pipe. The flow conditioner 106 can be configured to provide a uniform and symmetrical flow profile within the process pipe 125. The flow conditioner 106 can be characterized by a construction suitable for a limited installation space.

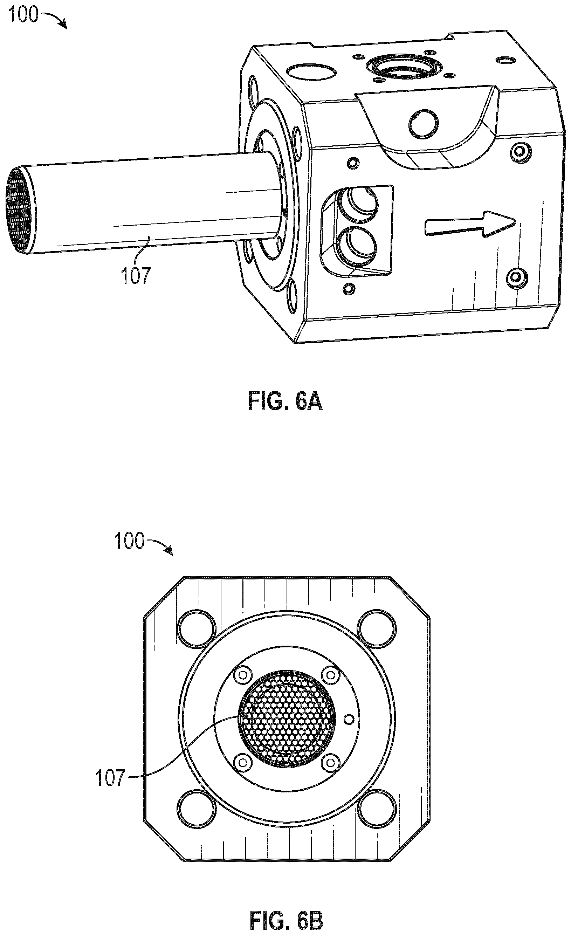

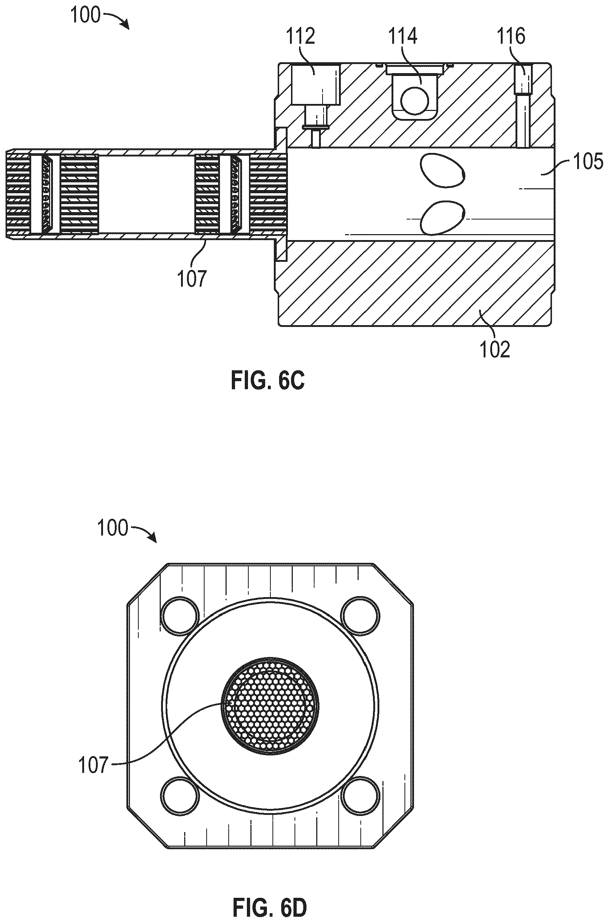

FIG. 6A, FIG. 6B, FIG. 6C and FIG. 6D respectively illustrate perspective, front, side sectional and back views of the flow meter assembly 100 configured with the front insert flow conditioner 106 assembly capable of handling severe flow disturbances, in accordance with an embodiment. The configuration shown in FIG. 6A, FIG. 6B, FIG. 6C and FIG. 6D is similar to the arrangement shown in FIG. 5A, FIG. 5B, FIG. 5C and FIG. 5D with the difference being that the flow conditioner 107 has a dimensional length longer than that of the flow conditioner 106.

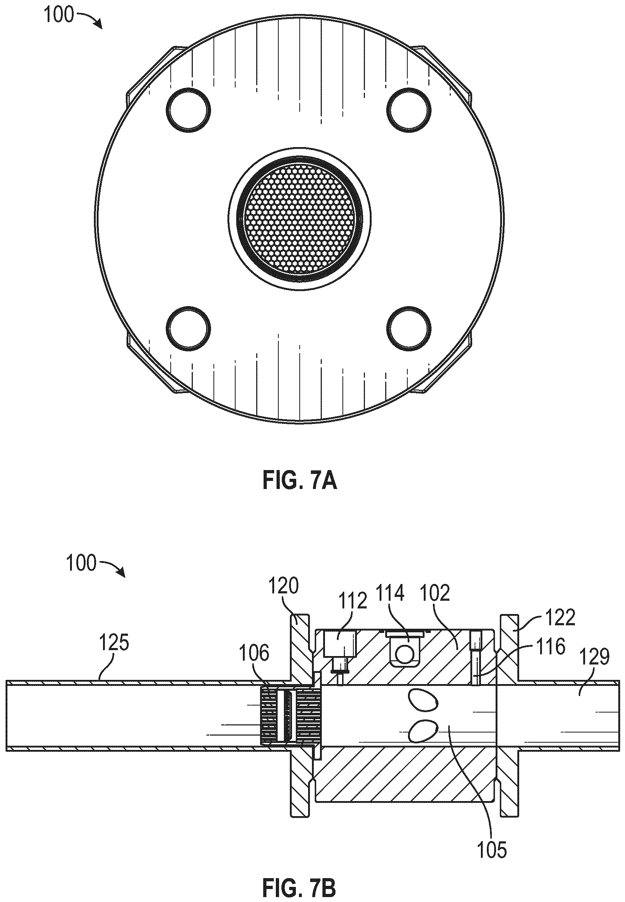

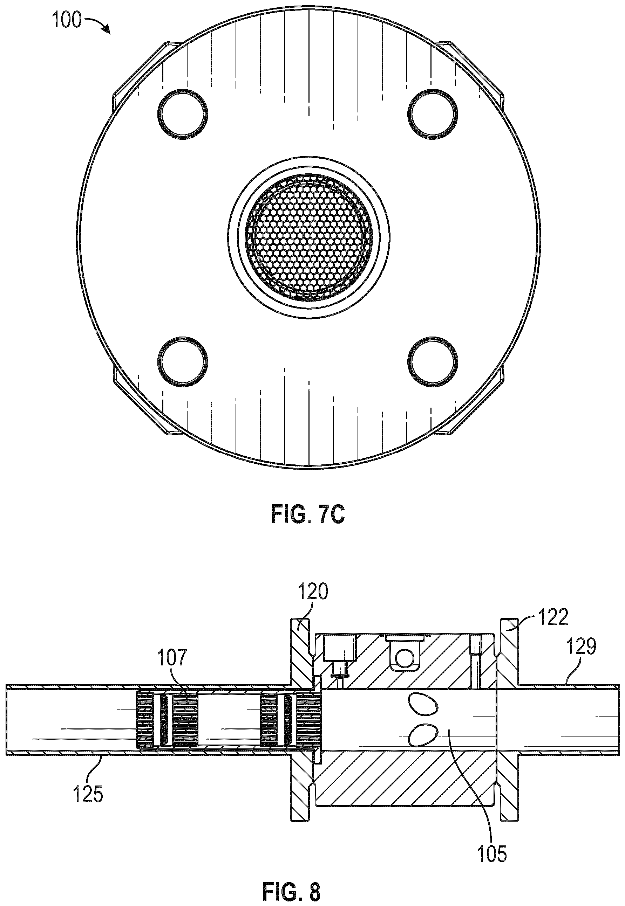

FIG. 7A, FIG. 7B and FIG. 7C respectively illustrate front, side sectional and back views of the flow meter assembly 100 with the flow conditioner 106 inserted into the pipe 125 and capable of handling mild flow disturbances, in accordance with an embodiment.

FIG. 8 illustrates a side sectional view of the flow meter assembly 100 with the flow conditioner 107 assembly inserted into the pipe 125 and capable of handling severe flow disturbances, in accordance with an embodiment. Note that the pipe 125 and the pipe 129 may be process pipes and/or flow pipes. Note that a process pipe and a flow pipe are terms often used in the context of industrial processes and flow measurement. While there is no strict delineation between the two terms, they are generally used to emphasize different aspects of a piping system.

A process pipe may relate to a conduit or pipeline within an industrial facility through which fluids (liquids or gases) flow as part of a larger manufacturing or production process. Process pipes are integral components of industrial systems, transporting materials such as chemicals, water, oil, or gases between different stages of a manufacturing or chemical process. These pipes play a crucial role in facilitating various operations within a facility, and they may have specific materials, coatings, or insulation designed to meet the requirements of the substances they transport.

A flow pipe, on the other hand, is a term often used in the context of flow measurement. It refers to a section of the process pipe where the flow of fluids is specifically monitored. A flow meter is a device installed in the flow pipe to measure the rate of fluid flow. Flow meters come in various types, including ultrasonic, electromagnetic, vortex, and turbine meters, among others. The purpose of monitoring the flow pipe with a flow meter is to obtain accurate measurements of the fluid flow rate, helping operators and control systems understand and manage the flow within the industrial process.

In essence, the process pipe is the broader term that encompasses the entire network of pipes within an industrial facility, while the flow pipe is a specific section of the process pipe where the flow is monitored using a flow meter. The flow pipe can be the segment where the flow meter is strategically placed to measure and analyze the characteristics of the fluid passing through. The distinction lies in the emphasis on the monitoring and measurement function within the larger network of pipes used for industrial processes. The pipes 125 and 129 discussed herein may be process pipes and/or flow pipes, depending on the implementation of the embodiments in, for example, a piping system.

Flow conditioners such as the flow conditioner 106 and the flow conditioner 107 can be used to improve the flow profile of a fluid as it passes through a pipe or conduit such as, for example, the flow pipe 125, the flow tube 105, and the flow pipe 129. These flow conditioners are particularly important in the context of the flow meter assembly 100, especially when the flow meter assembly 100 incorporates ultrasonic flow meters such as the flow meter 116. A primary purpose of a flow conditioner is to create a more uniform and symmetrical flow profile, ensuring accurate and reliable measurements by the flow meter. The disclosed flow conditioners are important for use with the flow meter assembly 100, especially when an ultrasonic flow meter is involved.

Fluid flow in pipes is often turbulent and irregular, leading to uneven velocity profiles across the pipe cross-section. This turbulence can result in inaccuracies when using flow meters. A flow conditioner such as flow conditioner 106 or flow conditioner 107 can help to smooth out the flow, creating a more uniform and symmetrical velocity profile. This, in turn, can enhance the accuracy of measurements by the flow meter 116.

The ultrasonic flow meter 116 can utilize the transit time or Doppler effect to measure flow rates by analyzing the time it takes for ultrasonic signals to travel between transducers. These meters are sensitive to variations in flow velocity across the pipe diameter. The flow conditioners 106, 107 can ensure that the flow profile is consistent, reducing the likelihood of measurement errors and improving the performance of ultrasonic flow meters.

Swirls and vortices in fluid flow can adversely impact the performance of flow meters, particularly ultrasonic ones. The flow conditioners 106, 107 can help eliminate or minimize these undesirable flow patterns, ensuring that the fluid passes through the meter in a more controlled and predictable manner. Real-world fluid flow conditions are rarely ideal, and variations in velocity profiles can occur due to pipe geometry, bends, fittings, and other factors. The flow conditioners 106, 107 can mitigate the impact of these non-ideal conditions, allowing the ultrasonic flow meter 116 to provide accurate measurements even in challenging environments.

**^{,}** As discussed previously, many industries have specific standards and guidelines for flow meter performance. The use of the flow conditioners 106, 107 can ensure that the flow meter assembly 100 meets or exceeds these standards, enhancing the credibility and reliability of the measurements. Flow meters, including ultrasonic ones, are typically calibrated under specific flow conditions. A consistent and predictable flow profile achieved with the flow conditioners 106, 107 can aid in maintaining the calibration accuracy of the flow meter over time. In some applications, space constraints may limit the available length of a straight pipe required for optimal flow meter performance. The flow conditioners 106, 107 may compensate for such limitations, allowing for accurate measurements even in installations with limited straight pipe lengths.

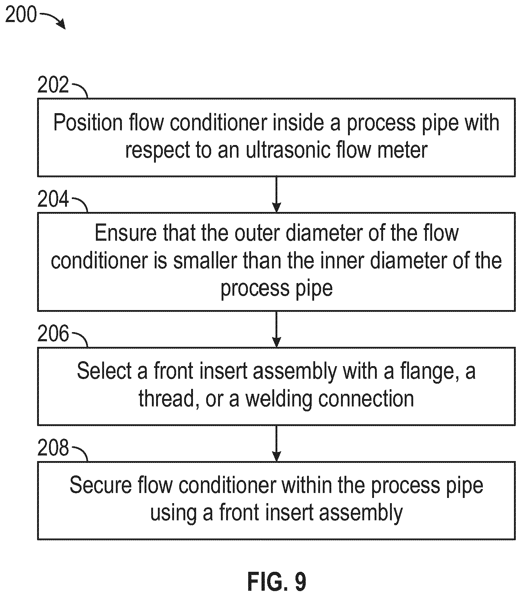

FIG. 9 illustrates a flow chart of operations depicting operational steps of a method 200 for assembling a flow conditioner, in accordance with an embodiment. As shown at block 202, a step or operation can be implemented for positioning a flow conditioner inside a process pipe with respect to an ultrasonic flow meter. Next, as indicated at block 204 a step or operation can be implemented to ensure that the outer diameter of the flow conditioner is smaller than the inner diameter of the process pipe. Then, as shown at block 206, a step or operation can be implemented select a front insert assembly with a flange, a thread, or a welding connection. Thereafter, as illustrated at block 208, a step or operation can be implemented to secure the flow conditioner within the process pipe using the front insert assembly.

As discussed previously, the flow conditioner can be configured to provide a uniform and symmetrical flow profile within the process pipe. In addition, the flow conditioner can be constructed with features suitable for limited installation space. Additional operational steps can be implemented as a part of method 200 including integrally connecting the front insert assembly to the flow conditioner for streamlined installation and assembly.

In addition, the flange, the thread, or the welding connection can be selected for the front insert assembly, such that these features may be adaptable to various process pipe configurations. Method 200 may also include a step or operation for integrating a series of flow-controlling elements into the flow conditioner to achieve a uniform and symmetrical flow profile. In addition, method 200 can also involve strategically positioning and shaping the flow-controlling elements within the flow conditioner to minimize turbulence and enhance flow conditioning performance.

The embodiments can used for "apple-to-apple" replacement of mechanical meters without pipe modification or disruption. In the context of flow meters, this is particular desired for several reasons. For example, ensuring an apple-to-apple replacement means selecting a new meter that is compatible with the existing system, both in terms of physical dimensions and operational requirements. This helps avoid the need for significant modifications to the infrastructure.

In addition, mechanical meters may have specific characteristics and performance parameters tailored to the system in which they operate. Replacing them with a similar model ensures that the new meter can seamlessly fit into the existing setup without requiring extensive adjustments. An apple-to-apple replacement minimizes downtime during the installation process. Since the replacement meter is designed to match the characteristics of the old one, the transition can be smoother, and the system can be brought back online more quickly.

Mechanical meters may be calibrated for specific applications. Replacing them with an identical or similar model helps maintain the accuracy and reliability of measurements, as the new meter is likely to have comparable calibration parameters. In addition, replacing meters with a similar type can be more cost-effective than opting for a completely different technology. This is because a similar meter might require fewer modifications to the existing infrastructure, reducing overall installation costs.

If the replacement meter is similar to the one being replaced, operators and maintenance personnel are likely already familiar with its operation and maintenance requirements. This reduces the learning curve and training time associated with a new technology. In some industries, there are regulatory requirements and standards that certain meters must meet. Choosing an apple-to-apple replacement approach such as disclosed herein can help ensure continued compliance with these standards without necessitating extensive reevaluation or recertification.

A replacement meter that is similar to the existing one is more likely to integrate seamlessly with the control and monitoring systems in place. This compatibility facilitates a smoother transition and ensures that the upgraded system functions cohesively. opting for an apple-to-apple replacement of mechanical meters, such as flow meters, is desirable for its compatibility, interchangeability, minimal disruption, calibration consistency, cost efficiency, operator familiarity, regulatory compliance, and ease of system integration.

The disclosed embodiments relate to a flow conditioner front-insert assembly method for ultrasonic flow meters. This approach offers several advantages, particularly in providing a uniform and symmetrical flow profile while consuming limited installation space. The embodiments offer a number of advantages. For example, the disclosed improved flow meter assembly including its front-insert assembly method can ensure that the flow conditioner can be positioned strategically in the flow path before the ultrasonic sensors. This placement allows the flow conditioner to effectively condition the flow, leading to a more uniform and symmetrical velocity profile. As a result, ultrasonic flow meters can achieve higher measurement accuracy and reliability.

Furthermore, by utilizing a front-insert assembly, the flow conditioner minimizes disturbances in the fluid flow before it reaches the ultrasonic sensors. This reduction in disturbances helps maintain a consistent flow profile, preventing fluctuations that could otherwise affect the accuracy of the measurements. In addition, a uniform and symmetrical flow profile generated by the flow conditioner can contribute to improved signal quality for ultrasonic measurements. This may be crucial for obtaining precise and reliable data, especially in applications where variations in flow conditions can impact the performance of the flow meter.

The disclosed front-insert assembly method for the flow meter assembly can be designed to consume limited installation space. This is particularly valuable in environments where available space is constrained. The compact design allows for the efficient use of space while still providing the necessary flow conditioning for accurate ultrasonic flow measurements. The front-insert assembly method simplifies the installation process, making it easier for operators to integrate the flow conditioner with the ultrasonic flow meter. Additionally, maintenance procedures are facilitated by the accessible placement of the flow conditioner, contributing to overall system reliability.

The ability to achieve a uniform and symmetrical flow profile makes the front-insert assembly method suitable for a wide range of applications. This versatility allows the technology to be deployed in diverse industrial settings where maintaining precise flow measurements is critical.

Many industries have standards and regulations that specify the required characteristics of flow profiles for accurate measurements. The front-insert assembly method helps meet or exceed these standards, ensuring that the ultrasonic flow meter complies with industry requirements. The design and placement of the flow conditioner in the front-insert assembly method contribute to cost efficiency. The optimized flow conditioning reduces the need for additional components or modifications, minimizing both initial setup costs and long-term operational expenses

The disclosed flow conditioner front-insert assembly method for ultrasonic flow meters offers advantages in terms of enhanced measurement accuracy, reduced flow disturbances, improved signal quality, space efficiency, ease of installation and maintenance, versatility in applications, compliance with industry standards, and cost-efficiency. These benefits collectively contribute to the reliable and efficient performance of ultrasonic flow measurement systems.

It will be appreciated that variations of the above-disclosed and other features and functions, or alternatives thereof, may be desirably combined into many other different systems or applications. It will also be appreciated that various presently unforeseen or unanticipated alternatives, modifications, variations or improvements therein may be subsequently made by those skilled in the art which are also intended to be encompassed by the following claims.

## Claims

1. A flow conditioner apparatus, comprising:
a flow conditioner configured for insertion with a process pipe with respect to an ultrasonic flow meter, wherein the flow conditioner is **characterized by** an outer diameter smaller than the inner diameter of the process pipe; and
a front insert assembly comprising a flange, thread, or welding connection, wherein the front insert assembly is configured to securely fix the flow conditioner within the process pipe.

2. The flow conditioner apparatus of claim 1, wherein the flow conditioner is configured to provide a uniform and symmetrical flow profile within the process pipe.

3. The flow conditioner apparatus of claim 1, wherein the flow conditioner is further **characterized by** a construction suitable for limited installation space.

4. The flow conditioner apparatus of claim 1, wherein the front insert assembly is integrally connected to the flow conditioner for efficient installation and assembly.

5. The flow conditioner apparatus of claim 1, wherein the flange, thread, or welding connection of the front insert assembly is adaptable to various process pipe configurations.

6. The flow conditioner apparatus of claim 1, wherein the flow conditioner comprises a series of flow-controlling elements to achieve the uniform and symmetrical flow profile.

7. The flow conditioner apparatus of claim 6, wherein the flow-controlling elements are strategically positioned and shaped to minimize turbulence and enhance the flow conditioning performance.

8. A flow conditioner apparatus, comprising:
a flow conditioner configured for insertion with a process pipe, wherein the flow conditioner comprises an outer diameter smaller than an inner diameter of the process pipe; and
a front insert assembly that securely fixes the flow conditioner within the process pipe.

9. The flow conditioner apparatus of claim 8 wherein the front insert assembly comprises a connection mechanism for fixing the flow conditioner within the process pipe.

10. The flow conditioner apparatus of claim 9 wherein the connection mechanism comprises at least one of: a flange, a thread or a welding connection.

11. The flow conditioner apparatus of claim 8, wherein the flow conditioner provides a uniform and symmetrical flow profile within the process pipe.

12. A method of assembling a flow conditioner, comprising:
positioning a flow conditioner inside a process pipe with respect to an ultrasonic flow meter;
ensuring that the outer diameter of the flow conditioner is smaller than the inner diameter of the process pipe;
selecting a front insert assembly with a flange, a thread, or a welding connection; and
securing the flow conditioner within the process pipe using the front insert assembly.

13. The method of claim 12 further comprising configuring the flow conditioner to provide a uniform and symmetrical flow profile within the process pipe.

14. The method of claim 12 further comprising constructing the flow conditioner with features suitable for limited installation space.

15. The method of claim 12 further comprising integrally connecting the front insert assembly to the flow conditioner for streamlined installation and assembly.
